# EUROPEAN PATENT APPLICATION

(11) **EP 4 439 723 A1**
(43) Date of publication of application: **02.10.2024**
(21) Application number: 22898332.6
(22) Date of filing: 28.10.2022
(51) Int. Cl.: H01M 4/525, C01G 53/00, H01M 4/505

(54) **TRANSITION METAL-CONTAINING HYDROXIDE, AND POSITIVE ELECTRODE ACTIVE SUBSTANCE OBTAINED USING TRANSITION METAL-CONTAINING HYDROXIDE AS PRECURSOR**

(30) Priority: 26.11.2021 JP 2021192200
(71) Applicant: Tanaka Chemical Corporation, Fukui-shi, Fukui 910-3131 (JP); Panasonic Energy Co., Ltd., Osaka 570-8511 (JP)
(72) Inventor: MAKIDA, Akari, Fukui-shi, Fukui 910-3131 (JP); KOBAYASHI, Ryota, Fukui-shi, Fukui 910-3131 (JP); TAKASHIMA, Masahiro, Fukui-shi, Fukui 910-3131 (JP); KINTSU, Kohei, Kadoma-shi, Osaka 571-8501 (JP); NOMURA, Shun, Kadoma-shi, Osaka 571-8501 (JP); CHIBA, Takeshi, Kadoma-shi, Osaka 571-8501 (JP); ISHIKAWA, Takayuki, Kadoma-shi, Osaka 571-8501 (JP); SHINOMIYA, Takuya, Kadoma-shi, Osaka 571-8501 (JP)
(74) Representative: Zacco GmbH
(86) International application number: PCT/JP2022/040399
(87) International publication number: WO 2023/095547

(57) **Abstract**

Provided is a transition metal-containing hydroxide capable of improving the cycle characteristics and safety of a secondary battery, while imparting an excellent battery capacity to the secondary battery, by preventing the elution of an additive metal element, which is a trace element contained in the transition metal-containing hydroxide, due to phase transition or segregation when the transition metal-containing hydroxide is calcined.

A transition metal-containing hydroxide that is a precursor of a positive electrode active material in a non-aqueous electrolyte secondary battery, the transition metal-containing hydroxide containing at least one main metal element selected from the group consisting of Ni, Co and Mn and at least one additive metal element selected from the group consisting of Mg, Ca, Sr, Ba, Ti, Zr, V, Nb, Cr, Mo, W, Fe, Ru, Cu, Zn, B, Al, Ga, Si, Sn, P and Bi, in which a cumulative pore volume in a BJH method measured by a gas adsorption method is 0.145 cm³/g or less.

## Description

### Technical Field

The present invention relates to a transition metal-containing hydroxide and a positive electrode active material for which a transition metal-containing hydroxide is used as a precursor and particularly to a transition metal-containing hydroxide capable of improving the cycle characteristics and safety of a secondary battery, while imparting an excellent battery capacity to the secondary battery, by preventing the elution of an additive metal element, which is a trace element contained in the transition metal-containing hydroxide, due to phase transition or segregation when the transition metal-containing hydroxide is calcined.

### Background Art

In recent years, secondary batteries have been in use in a wide range of fields, such as mobile devices or vehicles for which electricity is used or jointly used as a power source, from the viewpoint of reducing environmental burdens. Examples of the secondary batteries include secondary batteries in which a non-aqueous electrolyte is used, such as lithium ion secondary batteries. Secondary batteries in which a non-aqueous electrolyte is used, such as lithium ion secondary batteries, are suitable for size and weight reduction and have characteristics of a high utilization rate and high cycle characteristics.

A positive electrode active material for a lithium ion secondary battery is manufactured by mixing and then calcining a transition metal-containing hydroxide, which is a precursor, and a lithium compound. In order to improve the battery capacity of a secondary battery, there is a need to improve the reactivity of the transition metal-containing hydroxide and the lithium compound upon manufacturing of the positive electrode active material. Therefore, there is a need to set the calcination temperature of a mixture of the transition metal-containing hydroxide and the lithium compound to a predetermined temperature or higher.

However, when the mixture of the transition metal-containing hydroxide and the lithium compound is calcined at the predetermined temperature or higher, the battery capacity of the secondary battery improves, but there have been cases where an additive metal element, which is a trace element contained in the transition metal-containing hydroxide, is eluted due to phase transition or segregation. When the additive metal element is eluted from the transition metal-containing hydroxide, there has been a problem in that the dispersion state of the additive metal element in the positive electrode active material becomes nonuniform and the cycle characteristics of the secondary battery deteriorate in some cases.

Therefore, it has been proposed to manufacture a transition metal-containing hydroxide by adding a chelate compound such as hydroxycarboxylic acid to a metal aqueous solution in which aluminum and other transition metal elements, which are additive metal elements, dissolve to improve the solubility of aluminum in water and then controlling the pH of the metal aqueous solution to coprecipitate all of aluminum and the other transition metals within the same pH range (Patent Literature 1). In Patent Literature 1, the manufacturing method is used, whereby it is possible to manufacture a transition metal-containing hydroxide in which the dispersion of aluminum is uniform, and, in a positive electrode active material obtained by mixing and calcining the transition metal-containing hydroxide and a lithium compound, the dispersion of aluminum is made to be uniform, and it is possible to impart excellent cycle characteristics to a lithium ion secondary battery.

However, in Patent Literature 1, when the mixture of the transition metal-containing hydroxide and the lithium compound is calcined at a predetermined temperature or higher to improve the battery capacity of the secondary battery, there are still cases where aluminum is eluted due to phase transition or segregation, and there is a room for improvement in terms of preventing the additive metal elements, such as aluminum, from the transition metal-containing hydroxide. In addition, when the additive metal element, such as aluminum, is eluted from the transition metal-containing hydroxide, there has been a problem in that the crystal structure stability of the positive electrode active material or the battery structure stability may deteriorate and the safety of the secondary battery may deteriorate.

Therefore, when the calcination temperature of the transition metal-containing hydroxide is set to be lower than the predetermined temperature to prevent the segregation of the additive metal element, it is possible to prevent the elution of the additive metal element due to segregation, but there has been a problem in that the battery capacity of a secondary battery deteriorates.

### Document List

### Patent Literature

Patent Literature 1: Japanese Patent Application Publication No. 2021-018974

### Summary of Invention

### Technical Problem

In consideration of the above-described circumstance, it is an object of the present invention to provide a transition metal-containing hydroxide capable of improving the cycle characteristics and safety of a secondary battery, while imparting an excellent battery capacity to the secondary battery, by preventing the elution of an additive metal element, which is a trace element contained in the transition metal-containing hydroxide, due to phase transition or segregation when the transition metal-containing hydroxide is calcined.

### Solution to Problem

A transition metal-containing hydroxide of the present invention prevents an additive metal element from being eluted due to phase transition or segregation even when the transition metal-containing hydroxide is calcined at a calcination temperature at which it is possible to impart an excellent battery capacity by controlling the cumulative pore volume in a BJH method measured by a gas adsorption method to be low.

A main point of the configuration of the present invention is as described below.
[1] A transition metal-containing hydroxide that is a precursor of a positive electrode active material in a non-aqueous electrolyte secondary battery, the transition metal-containing hydroxide comprising:
   at least one main metal element selected from the group consisting of nickel (Ni), cobalt (Co) and manganese (Mn); and at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P) and bismuth (Bi),
   wherein a cumulative pore volume in a BJH method measured by a gas adsorption method is 0.145 cm³/g or less.
[2] The transition metal-containing hydroxide according to [1], wherein the transition metal-containing hydroxide is represented by the following general formula (1)

   Ni _{1-x-y}M1ₓM2_{y}(OH)₂₊ₐ (1)

   wherein M1 is cobalt (Co) and/or manganese (Mn), M2 is at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P) and bismuth (Bi), 0 ≤ x < 1.00, 0 < y ≤ 0.20, x + y ≤ 1.00, and a represents a numerical value that satisfies a valence.
[3] The transition metal-containing hydroxide according to [1] or [2], wherein a value of a cumulative average pore diameter in a BJH method measured by a gas adsorption method is 5.5 nm or more and 14.0 nm or less.
[4] The transition metal-containing hydroxide according to [1] or [2], wherein a particle diameter (D50) at a cumulative volume percentage of 50 vol% is 5.0 µm or more and 15.0 µm or less.
[5] The transition metal-containing hydroxide according to [1] or [2], wherein a content of a SO₄ component is 0.60 mass% or less.
[6] The transition metal-containing hydroxide according to [1] or [2], wherein aluminum (Al) is contained as the additive metal element.
[7] A positive electrode active material for a non-aqueous electrolyte secondary battery, obtained by calcining the transition metal-containing hydroxide according to [1] or [2] and a lithium compound.
[8] A non-aqueous electrolyte secondary battery comprising the positive electrode active material for a non-aqueous electrolyte secondary battery according to [7].

### Effects of Invention

According to a transition metal-containing hydroxide of the present invention, a cumulative pore volume in a BJH method measured by a gas adsorption method is controlled to be 0.145 cm³/g or less, whereby it is possible to prevent an additive metal element contained in the transition metal-containing hydroxide from being segregated even when the transition metal-containing hydroxide is calcined at a calcination temperature at which it is possible to impart an excellent battery capacity, and it is thus possible to improve the cycle characteristics and safety of a secondary battery, while imparting an excellent battery capacity to the secondary battery, by preventing the elution of the additive metal element due to segregation during calcination.

According to the transition metal-containing hydroxide of the present invention, a value of a cumulative average pore diameter in a BJH method measured by a gas adsorption method is 5.5 nm or more and 14.0 nm or less, whereby it is possible to more reliably prevent the additive metal element contained in the transition metal-containing hydroxide from being segregated even when the transition metal-containing hydroxide is calcined at a calcination temperature at which it is possible to impart an excellent battery capacity.

According to the transition metal-containing hydroxide of the present invention, a particle diameter (D50) at a cumulative volume percentage of 50 vol% is 5.0 µm or more and 15.0 µm or less, whereby it is possible to make it easy to control the cumulative pore volume in the BJH method measured by the gas adsorption method to be 0.145 cm³/g or less.

According to the transition metal-containing hydroxide of the present invention, a content of a SO₄ component is 0.60 mass% or less, whereby it is possible to make it easy to optimize a reaction between a lithium compound and the transition metal-containing hydroxide during calcination.

### Description of Embodiments

First, a transition metal-containing hydroxide of the present invention will be described in detail.

The transition metal-containing hydroxide of the present invention is a secondary particle formed by the aggregation of a plurality of primary particles, and the transition metal-containing hydroxide is an aggregate of a plurality of primary particles. The particle shape of the transition metal-containing hydroxide of the present invention is not particularly limited and is a variety of particle shapes, and examples thereof include an approximately spherical shape, an approximately elliptical cross-sectional shape, a trapezoidal cross-sectional shape and the like.

As a composition of the transition metal-containing hydroxide of the present invention, a main metal element that is at least one transition metal selected from the group consisting of nickel (Ni), cobalt (Co) and manganese (Mn) and at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P) and bismuth (Bi) are contained. Examples of a specific composition of the transition metal-containing hydroxide of the present invention include a transition metal-containing hydroxide represented by the following general formula (1):

Ni _{1-x-y}M1ₓM2_{y}(OH)₂₊ₐ (1)

(in the formula, M1 is cobalt (Co) and/or manganese (Mn), M2 is at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P) and bismuth (Bi), 0 ≤ x < 1.00, 0 < y ≤ 0.20, x + y ≤ 1.00, and a represents a numerical value that satisfies a valence). Here, a numerical range of x is more preferably 0 < x < 1.00 and particularly preferably 0.02 ≤ x ≤ 0.30 from the viewpoint of further improving a battery capacity. In addition, here, a numerical range of y is more preferably 0 < y ≤ 0.10 and particularly preferably 0.02 ≤ y ≤ 0.08 from the viewpoint of further improving the battery capacity.

As the specific composition of the transition metal-containing hydroxide of the present invention, for example, in the general formula (1), as the additive metal element M2, magnesium (Mg), zirconium (Zr), tungsten (W), copper (Cu), zinc (Zn) and aluminum (Al) are preferable, and aluminum (Al) is particularly preferable.

In the transition metal-containing hydroxide of the present invention, a cumulative pore volume in a BJH method measured by a gas adsorption method is controlled to be 0.145 cm³/g or less. The cumulative pore volume in the BJH method measured by the gas adsorption method is controlled to be 0.145 cm³/g or less, whereby it is possible to prevent an additive metal element contained in the transition metal-containing hydroxide from being segregated even when the transition metal-containing hydroxide is calcined at a calcination temperature at which it is possible to impart an excellent battery capacity (for example, calcining a mixture of the transition metal-containing hydroxide and a lithium compound). Therefore, in a positive electrode active material obtained by calcining the transition metal-containing hydroxide of the present invention, it is possible to prevent the elution of the additive metal element due to segregation, and a secondary battery loaded with the positive electrode active material can obtain excellent cycle characteristics by preventing the elution of the additive metal element due to segregation during calcination while having an excellent battery capacity. In addition, deterioration of the crystal structure stability of the positive electrode active material and the battery structure stability is prevented by preventing the elution of the additive metal element due to segregation during calcination, and the secondary battery loaded with the positive electrode active material has excellent safety.

As the calcination temperature at which it is possible to impart an excellent battery capacity, for example, as a temperature at which the lithium compound is reacted with the transition metal-containing hydroxide, a relatively high temperature is preferable from the viewpoint of crystal growth, and examples thereof include temperatures of 600°C or higher and 1000°C or lower.

The cumulative pore volume in the BJH method measured by the gas adsorption method is not particularly limited as long as the cumulative pore volume is 0.145 cm³/g or less, but the cumulative pore volume in the BJH method measured by the gas adsorption method is preferably as low as possible, an upper limit value thereof is preferably 0.140 cm³/g, more preferably 0.130 cm³/g and particularly preferably 0.120 cm³/g. On the other hand, a lower limit value of the cumulative pore volume in the BJH method measured by the gas adsorption method is preferably 0.050 cm³/g, more preferably 0.055 cm³/g and particularly preferably 0.057 cm³/g from the viewpoint of preventing the reactivity of the transition metal-containing hydroxide and the lithium compound from being excessively inhibited, for example. The above-described upper limit value and lower limit value can be arbitrarily combined together.

In the transition metal-containing hydroxide of the present invention, a value of a cumulative average pore diameter in a BJH method measured by a gas adsorption method is not particularly limited, but a lower limit value thereof is preferably 5.5 nm, more preferably 6.0 nm, still more preferably 6.5 nm and particularly preferably 7.0 nm from the viewpoint of making it possible to more reliably prevent the additive metal element from being segregated even when the transition metal-containing hydroxide is calcined at the calcination temperature at which it is possible to impart an excellent battery capacity (for example, a temperature of 600°C or higher and 1000°C or lower). On the other hand, an upper limit value of the cumulative average pore diameter in the BJH method measured by the gas adsorption method is preferably 14.0 nm, more preferably 13.5 nm, still more preferably 12.5 nm and particularly preferably 12.0 nm from the viewpoint of making it possible to more reliably prevent the additive metal element from being segregated even when the transition metal-containing hydroxide is calcined at the calcination temperature at which it is possible to impart an excellent battery capacity. The above-described upper limit value and lower limit value can be arbitrarily combined together.

A particle diameter of the transition metal-containing hydroxide of the present invention is not particularly limited, but a lower limit value of, for example, a particle diameter at a cumulative volume percentage of 50 vol% (hereinafter, simply referred to as "D50" in some cases) is preferably 5.0 µm, more preferably 7.0 µm and particularly preferably 10.0 µm from the viewpoint of improving the loading density of the positive electrode active material into a positive electrode while making it possible to facilitate the control of the cumulative pore volume in the BJH method measured by the gas adsorption method to be 0.145 cm³/g or less. On the other hand, an upper limit value of D50 of the transition metal-containing hydroxide is preferably 15.0 µm and particularly preferably 13.0 µm from the viewpoint of improving the contacting property with an electrolyte while making it possible to facilitate the control of the cumulative pore volume in the BJH method measured by the gas adsorption method to be 0.145 cm³/g or less. The above-described D50 means a particle diameter measured with a particle size distribution measuring instrument using a laser diffraction/scattering method. The above-described upper limit value and lower limit value can be arbitrarily combined together.

For the transition metal-containing hydroxide of the present invention, as described below, as a raw material liquid, there are cases where an aqueous solution containing a metal ion, in which a salt of a main metal and sulfuric acid and a salt of an additive metal and sulfuric acid have been dissolved in water, is used. Therefore, the transition metal-containing hydroxide of the present invention contains a sulfuric acid component (SO₄ component) in some cases. A content of the SO₄ component in 100 mass% of the transition metal-containing hydroxide is not particularly limited, but an upper limit thereof is preferably 0.60 mass% and particularly preferably 0.50 mass% from the viewpoint of efficiently advancing the reaction of the lithium compound. On the other hand, a lower limit value of the content of the SO₄ component is preferably as low as possible and is preferably 0.10 mass% and more preferably 0.15 mass% from the viewpoint of the industrial production cost. The above-described upper limit value and lower limit value can be arbitrarily combined together.

Thereafter, a method for manufacturing the transition metal-containing hydroxide of the present invention will be described. The method for manufacturing the transition metal-containing hydroxide of the present invention includes a crystallization step. The crystallization step is a step of obtaining a transition metal-containing hydroxide particle by adding and mixing a solution containing a salt of a main metal element that is at least one transition metal selected from the group consisting of nickel (Ni), cobalt (Co) and manganese (Mn) and a salt of at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P) and bismuth (Bi) (raw material liquid) and a solution containing a complexing agent to and in a reaction tank and supplying a pH adjuster to a rection solution in the reaction tank so that the pH based on a liquid temperature of 40°C of the reaction solution in the reaction tank is maintained in a range of 9 or higher and 13 or lower to cause a coprecipitation reaction of the main metal element and the additive metal element in the reaction solution by neutralization crystallization. It is possible to manufacture the transition metal-containing hydroxide of the present invention in which the cumulative pore volume in the BJH method measured by the gas adsorption method is controlled to be 0.145 cm³/g or less by controlling the temperature range of the reaction solution in the reaction tank to a predetermined range while controlling the amount of the raw material liquid added per unit time with respect to the capacity of the reaction tank within a predetermined range in the crystallization step. Therefore, upon manufacturing the transition metal-containing hydroxide of the present invention, there is no need to use any special component other than substances that have been conventionally used.

Specifically, by a coprecipitation reaction, a solution containing a complexing agent and a pH adjuster are added as appropriate to a solution containing a salt of at least one main metal element selected from the group consisting of nickel (Ni), cobalt (Co) and manganese (Mn) (for example, sulfate) and a salt of at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P) and bismuth (Bi) (for example, sulfate) (raw material liquid), and a mixed solution (reaction solution) in a reaction tank is stirred as appropriate, thereby causing a neutralization reaction in the reaction tank for crystallization, whereby a transition metal-containing hydroxide particle is prepared to obtain a slurry-like suspension containing the transition metal-containing hydroxide particle. As a solvent in the suspension, for example, water is used. Therefore, examples of the raw material liquid include aqueous solutions containing a salt of the main metal element and a salt of the additive metal element. In addition, examples of the solution containing a complexing agent include aqueous solutions of a complexing agent.

The complexing agent is not particularly limited as long as it is capable of forming a complex with an ion of the main metal element and an ion of the additive metal element in the aqueous solution, and examples thereof include an ammonium ion donor, hydrazine, ethylenediaminetetraacetic acid, nitrilotriacetic acid, uracil diacetic acid and glycine. Examples of the ammonium ion donor include ammonium sulfate, ammonium chloride, ammonium carbonate, ammonium fluoride and the like.

Upon the coprecipitation reaction, as described above, a pH adjuster is added as appropriate to adjust the pH value of the aqueous solution, which is the reaction solution. Examples of the pH adjuster include alkali metal hydroxides (for example, sodium hydroxide and potassium hydroxide).

Upon the coprecipitation reaction, as described above, the temperature range of the reaction solution in the reaction tank is controlled to a predetermined range while controlling the amount of the raw material liquid added per unit time with respect to the capacity of the reaction tank within a predetermined range. Specifically, the fraction of the amount B (L/min) of the raw material liquid added per unit time with respect to the capacity A (L) of the reaction tank is adjusted so that a value of [amount added B (L/min)/capacity A (L) of reaction tank] × 100 is in a range of 0.06 or more and 0.25 or less. When the value of [amount added B (L/min)/capacity A (L) of reaction tank] × 100 is controlled to be in a range of 0.06 or more and 0.25 or less, it is possible to contribute to controlling the cumulative pore volume in the BJH method measured by the gas adsorption method to be 0.145 cm³/g or less by controlling the crystal growth rate upon the coprecipitation reaction.

In addition, the temperature of the reaction solution is adjusted to be in a range of 35°C or higher and 75°C or lower. When the temperature of the reaction solution is made to be in a range of 35°C or higher and 75°C or lower, it is possible to contribute to controlling the cumulative pore volume in the BJH method measured by the gas adsorption method to be 0.145 cm³/g or less by controlling the crystal growth rate upon the coprecipitation reaction.

In addition, in the case of using the ammonium ion donor as the complexing agent, the ammonium ion donor is preferably added to the reaction tank from an addition port different from an addition port for the raw material liquid. In addition, in the case of using the ammonium ion donor as the complexing agent, the ammonium ion concentration of the reaction solution is not particularly limited, but is preferably adjusted to be in a range of 2.0 g/L or more and 15.0 g/L or less from the viewpoint of reliably controlling the cumulative pore volume in the BJH method measured by the gas adsorption method to be 0.145 cm³/g or less. A reaction atmosphere is preferably adjusted to be an inert atmosphere, for example, a nitrogen atmosphere. In addition, a stirring condition of a stirring device disposed in the reaction tank needs to be adjusted as appropriate to be within a predetermined range.

Examples of the reaction tank that is used in the method for manufacturing the transition metal-containing hydroxide of the present invention include a continuous-type reaction tank in which the obtained transition metal-containing hydroxide is caused to overflow from an overflow tube for separation and a batch-type reaction tank in which the transition metal-containing hydroxide is not discharged to the outside of a system until the end of the reaction.

As described above, the transition metal-containing hydroxide particle obtained in the crystallization step is filtered from the suspension and then washed with an alkali aqueous solution to remove an impurity contained in the transition metal-containing hydroxide particle (for example, SO₄ or the like), whereby it is possible to obtain the transition metal-containing hydroxide of the present invention. After that, a solid phase and a liquid phase are separated from each other in a solid-liquid separation step, the solid phase containing the transition metal-containing hydroxide is washed as necessary, and the transition metal-containing hydroxide is thermally treated and dried, whereby it is possible to obtain a powder-like transition metal-containing hydroxide.

The transition metal-containing hydroxide of the present invention can be used as a precursor of a positive electrode active material for a non-aqueous electrolyte secondary battery. Thereafter, a positive electrode active material for a non-aqueous electrolyte secondary battery in which the transition metal-containing hydroxide of the present invention is used as a precursor (hereinafter, simply referred to as "positive electrode active material" in some cases) will be described. The positive electrode active material is an aspect obtained by mixing and calcining the transition metal-containing hydroxide of the present invention, which is a precursor, with, for example a lithium compound. A crystal structure of the positive electrode active material is a layered structure and is preferably a trigonal crystal structure, a hexagonal crystal structure or a monoclinic crystal structure from the viewpoint of obtaining a secondary battery having a high discharge capacity.

The positive electrode active material in which the transition metal-containing hydroxide of the present invention is used as a precursor can be used as, for example, a positive electrode active material of a non-aqueous secondary battery such as a lithium ion secondary battery.

At the time of manufacturing the positive electrode active material, the transition metal-containing hydroxide may be used as a precursor by performing a step of preparing the transition metal-containing hydroxide into a transition metal-containing oxide as a pretreatment as necessary. Examples of a method for preparing a transition metal-containing oxide from the transition metal-containing hydroxide include an oxidation treatment in which the transition metal-containing hydroxide is heated in an atmosphere where an oxygen gas is present, for example, at a temperature of 300°C or higher and 800°C or lower, preferably 500°C or higher and 750°C or lower, for one hour or longer and 10 hours or shorter before adding the lithium compound.

Thereafter, a method for manufacturing the positive electrode active material will be described. For example, in the method for manufacturing the positive electrode active material, first, the lithium compound is added to the transition metal-containing hydroxide (or the transition metal-containing oxide obtained by performing the pretreatment) to prepare a mixture of the transition metal-containing hydroxide (or the transition metal-containing oxide) and the lithium compound. The lithium compound is not particularly limited as long as it is a compound containing lithium, and examples thereof include lithium carbonate, lithium hydroxide, lithium nitrate, lithium acetate, lithium oxalate, lithium halide and the like. In addition, the amount of the lithium compound blended can be selected as appropriate so as for the positive electrode active material to have a desired lithium composition.

Thereafter, it is possible to manufacture the positive electrode active material by calcining the mixture. As a calcination condition, examples of a calcination temperature at which the battery capacity of the non-aqueous electrolyte secondary battery improves include calcination temperatures of 600°C or higher and 1000°C or lower. In addition, a half width of the positive electrode active material obtained by calcination (that is, a calcined product of the transition metal-containing hydroxide of the present invention and the lithium compound) in a (104) plane analyzed from an X-ray diffraction pattern is controlled to be in a predetermined range by calcining the mixture at the calcination temperature at which the battery capacity of the non-aqueous electrolyte secondary battery improves. In a composition of the transition metal-containing hydroxide containing at least one main metal element selected from the group consisting of nickel (Ni), cobalt (Co) and manganese (Mn) and at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P) and bismuth (Bi), for example, a composition containing nickel (Ni), cobalt (Co) and aluminum (Al), when the half width of the positive electrode active material obtained by calcination in the (104) plane analyzed from the X-ray diffraction pattern is in a range of 0.220° or more and 0.250° or less, the mixture has been calcined at the calcination temperature at which the battery capacity of the non-aqueous electrolyte secondary battery improves (for example, a calcination temperatures of 600°C or higher and 1000°C or lower). In the range of the half width in the (104) plane, a range of 0.230° or more and 0.240° or less is preferable since the battery capacity of the non-aqueous electrolyte secondary battery further improves at the calcination temperature.

In addition, examples of the calcination condition include a temperature rise rate of 50 °C/h or higher and 300 °C/h or lower and a calcination time of five hours or longer and 20 hours or shorter. The atmosphere of the calcination is not particularly limited, and examples thereof include the atmosphere, oxygen and the like. In addition, a calcination furnace that is used in the calcination is not particularly limited, and examples thereof include a stationary box furnace, a roller hearth-type continuous furnace and the like.

Since the transition metal-containing hydroxide of the present invention is capable of preventing the elution of the additive metal element, which is a trace element contained in the transition metal-containing hydroxide, due to phase transition or segregation when calcined at the calcination temperature at which the battery capacity improves, the dispersion state of the additive metal element in the positive electrode active material has been made to be uniform, and it is also possible to impart excellent cycle characteristics to the non-aqueous electrolyte secondary battery. In addition, the transition metal-containing hydroxide of the present invention is capable of preventing the elution of the additive metal element due to segregation when calcined at the calcination temperature at which the battery capacity improves, it is thus also possible to impart excellent stability to the non-aqueous electrolyte secondary battery.

Thereafter, a positive electrode in which the positive electrode active material is used will be described. The positive electrode includes a positive electrode current collector and a positive electrode active material layer which is formed on a surface of the positive electrode current collector and in which the positive electrode active material is used. The positive electrode active material layer includes the positive electrode active material, a binding agent (binder) and a conductive aid. The conductive aid is not particularly limited as long as it can be used for non-aqueous electrolyte secondary batteries, and it is possible to use, for example, a carbon-based material. Examples of the carbon-based material include a graphite powder, carbon black (for example, acetylene black), a fibrous carbon material and the like. The binding agent is not particularly limited, and examples thereof include polymer resins such as polyvinylidene fluoride (PVdF), butadiene rubber (BR), polyvinyl alcohol (PVA), carboxymethyl cellulose (CMC) and polytetrafluoroethylene (PTFE) and combinations thereof. The positive electrode current collector is not particularly limited, and it is possible to use, for example, a band-like member for which a metallic material such as Al, Ni or stainless steel is used as a formation material. Among these, a member for which Al is used as the formation material and which has been processed into a thin film shape is preferable from the viewpoint of easy processing and a low cost.

As a method for manufacturing the positive electrode, for example, first, the positive electrode active material, the conductive aid and the binding agent are mixed together to prepare a positive electrode active material slurry. Next, the positive electrode active material slurry is applied onto the positive electrode current collector and dried by a well-known filling method and pressed to be fixed, whereby it is possible to obtain a positive electrode.

The positive electrode obtained as described above, for which the positive electrode active material is used, a negative electrode including a negative electrode current collector and a negative electrode active material layer formed on a surface of the negative electrode current collector and containing a negative electrode active material, an electrolytic solution containing a predetermined electrolyte and a separator are loaded by a well-known method, whereby it is possible to assemble a non-aqueous electrolyte secondary battery.

Examples of the electrolyte contained in the electrolytic solution include LiClO₄, LiPF₆, LiAsF₆, LiSbF₆, LiBF₄, LiCFaSOa, LiN(SO₂CF₃)₂, LiN(SO₂C₂F₅)₂, LiN(SO₂CF₃)(COCF₃), Li(C₄F₉SO₃), LiC(SO₂CF₃)₃, Li₂B₁₀Cl₁₀, LiBOB (where, BOB is bis(oxalato)borate), LiFSI (where, FSI is bis(fluorosulfonyl)imide), lower aliphatic carboxylic acid lithium salts and lithium salts such as LiAlCl₄. These may be used singly or two or more thereof may be used jointly.

As a dispersion medium of the electrolyte, it is possible to use, for example, carbonates such as propylene carbonate, ethylene carbonate, dimethyl carbonate, diethyl carbonate, ethylmethyl carbonate, 4-trifluoromethyl-1,3-dioxolan-2-one and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran and 2-methyltetrahydrofuran; esters such as methyl formate, methyl acetate and γ-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide and 1,3-propane sultone or organic solvents thereof into which a fluoro group has been further introduced (organic solvents in which one or more of hydrogen atoms have been substituted with fluorine atoms). These may be used singly or two or more thereof may be used jointly.

In addition, a solid electrolyte may be used instead of the electrolytic solution containing the electrolyte. As the solid electrolyte, it is possible to use, for example, organic polymer electrolytes such as polyethylene oxide-based polymer compounds and polymer compounds containing at least one of a polyorganosiloxane chain or a polyoxyalkylene chain. In addition, it is also possible to use the polymer compounds made to hold a non-aqueous electrolytic solution, so-called gel-type electrolytes. In addition, examples thereof include inorganic solid electrolytes containing a sulfide such as Li₂S-SiS₂, Li₂S-GeS₂, Li₂-P₂S₅, Li₂S-B₂S₃, Li₂S-SiS₂-Li₃PO₄, Li₂S-SiS₂-Li₂SO₄ and Li₂S-GeS₂-P₂S₅. These may be used singly or two or more thereof may be used jointly.

Examples of the separator include members in a form of a porous film, a nonwoven fabric or a woven fabric having a material such as a polyolefin resin such as polyethylene or polypropylene, a fluororesin or a nitrogen-containing aromatic polymer.

### [Examples]

Next, examples of a transition metal-containing hydroxide of the present invention will be described, but the present invention is not limited to these examples within the scope of the gist thereof.

### Manufacturing of Transition Metal-Containing Hydroxides of Examples and Comparative Example

### Manufacturing of Transition Metal-Containing Hydroxide of Example 1

A raw material liquid that was an aqueous solution containing nickel sulfate, cobalt sulfate and aluminum sulfate dissolved in fractions of 91.0/4.0/5.0 in terms of the mole ratio of nickel/cobalt/aluminum, an ammonium sulfate aqueous solution (ammonium ion donor) and a sodium hydroxide aqueous solution (pH adjuster) were added dropwise to a continuous-type reaction tank, and a crystallization step was performed. In the crystallization step, the raw material liquid was added dropwise so that the value of [amount B (L/min) of raw material liquid added per unit time/capacity A (L) of reaction tank] × 100 reached 0.18, and a liquid mixture was continuously stirred with a stirrer including a stirring blade while maintaining the liquid temperature of the liquid mixture in the reaction tank at 45°C and maintaining the pH of the liquid mixture in the reaction tank at 12.22 based on the liquid temperature of 40°C and the ammonia concentration at 11.0 g/L. In the reaction tank, a nitrogen atmosphere was formed. A transition metal-containing hydroxide particle crystallized by a neutralization reaction was caused to overflow from an overflow tube of the reaction tank and taken out as a suspension of the transition metal-containing hydroxide particle. The suspension of the transition metal-containing hydroxide particle taken out by overflow as described above was filtered, then, washed with an alkali aqueous solution (8 mass% sodium hydroxide aqueous solution) and separated into a solid and a liquid. After that, the separated solid phase was washed, and furthermore, each treatment of dehydration and drying was performed thereon, thereby obtaining a powder-like transition metal-containing hydroxide.

### Manufacturing of Transition Metal-Containing Hydroxide of Example 2

A transition metal-containing hydroxide was manufactured in the same manner as in Example 1 except that a raw material liquid in which the mole ratio of nickel/cobalt/aluminum was changed to 87.0/9.0/4.0 was used, the raw material liquid was added dropwise so that the value of [amount B (L/min) of raw material liquid added per unit time/capacity A (L) of reaction tank] × 100 reached 0.07, the liquid temperature of a liquid mixture in the reaction tank was maintained at 40°C, the pH of the liquid mixture in the reaction tank was maintained at 12.03 based on the liquid temperature of 40°C and the ammonia concentration was maintained at 7.5 g/L.

### Manufacturing of Transition Metal-Containing Hydroxide of Example 3

A transition metal-containing hydroxide was manufactured in the same manner as in Example 1 except that the raw material liquid was added dropwise so that the value of [amount B (L/min) of raw material liquid added per unit time/capacity A (L) of reaction tank] × 100 reached 0.15, the liquid temperature of a liquid mixture in the reaction tank was maintained at 50°C, the pH of the liquid mixture in the reaction tank was maintained at 12.15 based on the liquid temperature of 40°C and the ammonia concentration was maintained at 11.7 g/L.

### Manufacturing of Transition Metal-Containing Hydroxide of Example 4

A transition metal-containing hydroxide was manufactured in the same manner as in Example 1 except that the raw material liquid was added dropwise so that the value of [amount B (L/min) of raw material liquid added per unit time/capacity A (L) of reaction tank] × 100 reached 0.07, the liquid temperature of a liquid mixture in the reaction tank was maintained at 40°C, the pH of the liquid mixture in the reaction tank was maintained at 12.49 based on the liquid temperature of 40°C and the ammonia concentration was maintained at 14.2 g/L.

### Manufacturing of Transition Metal-Containing Hydroxide of Comparative Example 1

A transition metal-containing hydroxide was manufactured in the same manner as in Example 1 except that the liquid temperature of a liquid mixture in the reaction tank was maintained at 30°C, the pH of the liquid mixture in the reaction tank was maintained at 12.41 based on the liquid temperature of 40°C and the ammonia concentration was maintained at 10.7 g/L.

Evaluation items of the physical properties of the transition metal-containing hydroxides of the examples and the comparative example are as described below.

### (1) Average Particle Diameter (D50)

The average particle diameter was measured with a particle size distribution measuring instrument (manufactured by Horiba Ltd., LA-920) (the principle is a laser diffraction/scattering method). As measurement conditions, water was used as a solvent, 1 mL of sodium hexamethaphosphate was injected as a dispersant, a transmittance after injection of a sample was set within a range of 85 ± 3%, and the sample was dispersed by generating ultrasonic waves. In addition, as a solvent refractive index upon analysis, 1.333 that is the refractive index of water, was used.

### (2) Content of SO₄ Component

The obtained transition metal-containing hydroxide was dissolved in hydrochloric acid, and the content of a S component was then measured using an inductively coupled plasma emission spectrometer (manufactured by PerkinElmer, Inc., Optima 7300DV). The content of the S component obtained by the measurement was converted into a SO₄ component, thereby calculating the content of the SO₄ component in the transition metal-containing hydroxide.

### (3) Cumulative Pore Volume

A cumulative pore volume by a BJH method was measured using an automatic specific surface area/pore distribution measuring instrument TRISTAR II 3020 (manufactured by Shimadzu Corporation) according to JIS Z 8831-2. As a pretreatment, the transition metal-containing hydroxide was degassed in an inert gas atmosphere at 105°C for 30 minutes.

### (4) Cumulative Average Pore Diameter

Upon measuring the cumulative pore volume, the cumulative average pore diameter was also measured together. That is, a cumulative average pore diameter by the BJH method was measured using the automatic specific surface area/pore distribution measuring instrument TRISTAR II 3020 (manufactured by Shimadzu Corporation) according to JIS Z 8831-2. As a pretreatment, the transition metal-containing hydroxide was degassed in an inert gas atmosphere at 105°C for 30 minutes.

The conditions of the crystallization step and the evaluation results of the physical properties of the transition metal-containing hydroxides of the examples and the comparative example are shown in Table 1.

**[Table 1]**

| | | Unit | Example 1 | Example 2 | Example 3 | Example 4 | Comparative Example 1 |
|---|---|---|---|---|---|---|---|
| Manufacturing conditions | [Amount B of raw material liquid added/capacity A of reaction tank] × 100 | [L/min]/L | 0,18 | 0,07 | 0,15 | 0,07 | 0,18 |
| | Reaction temperature | °C | 45 | 40 | 50 | 40 | 30 |
| | Ammonia concentration | g/L | 11,0 | 7,5 | 11,7 | 14,2 | 10,7 |
| Composition | Nickel | mol% | 91,0 | 87,0 | 91,0 | 91,0 | 91,0 |
| | Cobalt | mol% | 4,0 | 9,0 | 4,0 | 4,0 | 4,0 |
| | Aluminum | mol% | 5,0 | 4,0 | 5,0 | 5,0 | 5,0 |
| Physical properties | D50 | µm | 11,6 | 11,0 | 11,5 | 12,3 | 11,3 |
| | SO₄ | wt% | 0,21 | 0,21 | 0,32 | 0,46 | 0,14 |
| | Cumulative pore volume | cm³/g | 0,133 | 0,076 | 0,074 | 0,058 | 0,149 |
| | Cumulative average pore diameter | nm | 8,1 | 7,9 | 11,0 | 9,2 | 4,4 |

### Manufacturing of Positive Electrode Active Materials Using Transition Metal-Containing Hydroxides of Examples and Comparative Example

On each of the transition metal-containing hydroxides of the examples and the comparative example, a step of preparing a transition metal-containing oxide by performing an oxidation treatment on the transition metal-containing hydroxide was performed in advance as a pretreatment. As the oxidation treatment, heating was performed in the atmosphere at a temperature of 550°C for three hours. After that, a lithium hydroxide powder was added to and mixed with the transition metal-containing oxide so that the mole ratio Li/(Ni + Co + Al) reached 1.02, thereby obtaining a mixture of the transition metal-containing oxide and the lithium hydroxide. A calcination treatment was performed on the obtained mixture in an oxygen atmosphere under calcination conditions of a calcination temperature of 750°C, a temperature rise rate of 170 °C/h and a calcination time of six hours, thereby obtaining a positive electrode active material.

The evaluation items of the positive electrode active materials obtained from the transition metal-containing oxides of the examples and the comparative example are as described below.

### (5) Segregation State of Aluminum

The segregation state of aluminum in the positive electrode active material was observed using an EDS-loaded scanning electron microscope SEM-EDS JSM-IT 1500 (manufactured by JEOL Ltd.) and evaluated with the following standards.
⊙: Segregation of aluminum is not observed.
O: Segregation of aluminum is almost not observed.
Δ: Segregation of aluminum is slightly observed.
X: Segregation of aluminum is often observed.

### (6) Half Width in (104) Plane

The half width of a diffraction peak that appeared within a range of 2Θ = 44.5 ± 1 in powder X-ray diffraction measurement using a CuKα ray was measured. Specifically, the powder X-ray diffraction measurement was performed using an X-ray diffractometer (manufactured by Rigaku Corporation, Ultima IV). An exclusive substrate was filled with a powder of the positive electrode active material, and measurement was performed using a CuKα ray (40 kV/40 mA) under conditions of a diffraction angle 2θ = 0° to 100°, a sample width of 0.03° and a scanning speed of 20 °/min, thereby acquiring a powder X-ray diffraction pattern.

A smoothing treatment or a background removal treatment was performed on the acquired powder X-ray diffraction pattern using integrated intensity calculation software, and the half width of a diffraction peak that appeared within a range of 2θ = 44.5 ± 1 was calculated. The half width of the diffraction peak that appeared within the range of 2θ = 44.5 ± 1 was evaluated with the following standards.
O: 0.230° or more and 0.240° or less
Δ: 0.220° or more and less than 0.230° or more than 0.240° and 0.250 or less
X: Less than 0.220° or more than 0.250°

The evaluation results of the positive electrode active materials obtained from the transition metal-containing oxides of the examples and the comparative example are shown in Table 2.

**[Table 2]**

| | | Unit | Example 1 | Example 2 | Example 3 | Example 4 | Comparative Example 1 |
|---|---|---|---|---|---|---|---|
| Evaluation items of positive electrode active material | Half width in (104) plane | ° | 0 | 0,232 | 0,24 | 0 | 0,222 |
| | | - | ○ | ○ | ○ | Δ | Δ |
| | Segregation state of aluminum | - | Δ | ○ | ○ | Ⓞ | × |

From Tables 1 and 2, it was clarified that, in the transition metal-containing hydroxides of Examples 1 to 4 where the cumulative pore volume in the BJH method measured by the gas adsorption method was 0.145 cm³/g or less, even when the positive electrode active materials were manufactured by calcination at 750°C, which is a calcination temperature at which the battery capacity improves, segregation of aluminum was prevented, and it was also possible to impart excellent cycle characteristics to non-aqueous electrolyte secondary batteries assembled with the positive electrode active materials for which the transition metal-containing hydroxides of Examples 1 to 4 were used as precursors. In the positive electrode active materials for which the transition metal-containing hydroxides of Examples 1 to 4 were used as precursors, it was proved that the half widths in the (104) planes were within a range of 0.220° to 0.250° and the calcination temperature of 750°C was a calcination temperature at which the battery capacities of the non-aqueous electrolyte secondary batteries assembled with the positive electrode active materials for which the transition metal-containing hydroxides of Examples 1 to 4 were used as precursors improved. In addition, it was clarified that, in the transition metal-containing hydroxides of Examples 1 to 4, since it was possible to prevent segregation of an additive metal element at the time of calcination at the calcination temperature at which the battery capacity improves, it was also possible to impart excellent safety to the non-aqueous electrolyte secondary batteries.

Particularly, it was clarified that, in the transition metal-containing hydroxides of Examples 2 to 4 where the cumulative pore volume in the BJH method measured by the gas adsorption method was 0.076 cm³/g or less, even when the positive electrode active materials were manufactured by calcination at 750°C at which the battery capacities of the non-aqueous electrolyte secondary batteries improved and the half widths in the (104) planes of the positive electrode active materials were within a range of 0.220° to 0.250°, segregation of aluminum was almost not observed or completely not observed, and it was thus possible to more reliably impart an excellent battery capacity or cycle characteristics and safety. In addition, it was clarified that, in the transition metal-containing hydroxide of Example 2 where the cumulative pore volume in the BJH method measured by the gas adsorption method was 0.076 cm³/g and the transition metal-containing hydroxide of Example 3 where the cumulative pore volume in the BJH method measured by the gas adsorption method was 0.074 cm³/g, while segregation of aluminum was more reliably prevented, the half widths in the (104) planes of the positive electrode active materials were within a range of 0.232° to 0.239°, and the battery capacities of the non-aqueous electrolyte secondary batteries also further improved. In the transition metal-containing hydroxide of Examples 1 to 4, the cumulative average pore diameters in the BJH method measured by the gas adsorption method were within a range of 7.9 nm to 11.0 nm.

On the other hand, it was clarified that, in the transition metal-containing hydroxide of Comparative Example 1 where the cumulative pore volume in the BJH method measured by the gas adsorption method was 0.149 cm³/g, when the positive electrode active material was manufactured by calcination at 750°C at which the battery capacity of the non-aqueous electrolyte secondary battery improved and the half width in the (104) plane of the positive electrode active material was 0.222°, segregation of aluminum was often observed, and there were cases where the cycle characteristics and safety of the non-aqueous electrolyte secondary battery deteriorated although the battery capacity was excellent. In the transition metal-containing hydroxide of Comparative Example 1, the cumulative average pore diameter in the BJH method measured by the gas adsorption method was 4.4 nm.

### Industrial Applicability

The transition metal-containing hydroxide of the present invention is capable of improving the cycle characteristics and safety of secondary batteries by preventing segregation of an additive metal element contained in the transition metal-containing hydroxide when the transition metal-containing hydroxide is calcined while imparting an excellent battery capacity to the secondary batteries and is thus highly useful particularly in the field of lithium ion secondary batteries that are loaded into high-functionality equipment.

## Claims

1. A transition metal-containing hydroxide that is a precursor of a positive electrode active material in a non-aqueous electrolyte secondary battery, the transition metal-containing hydroxide comprising:
at least one main metal element selected from the group consisting of nickel (Ni), cobalt (Co) and manganese (Mn); and
at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P) and bismuth (Bi),
wherein a cumulative pore volume in a BJH method measured by a gas adsorption method is 0.145 cm³/g or less.

2. The transition metal-containing hydroxide according to claim 1, wherein the transition metal-containing hydroxide is represented by the following general formula (1),
Ni _{1-x-y}M1ₓM2_{y}(OH)₂₊ₐ (1)
wherein M1 is cobalt (Co) and/or manganese (Mn), M2 is at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P) and bismuth (Bi), 0 ≤ x < 1.00, 0 < y ≤ 0.20, x + y ≤ 1.00, and a represents a numerical value that satisfies a valence.

3. The transition metal-containing hydroxide according to claim 1 or 2, wherein a value of a cumulative average pore diameter in a BJH method measured by a gas adsorption method is 5.5 nm or more and 14.0 nm or less.

4. The transition metal-containing hydroxide according to claim 1 or 2, wherein a particle diameter (D50) at a cumulative volume percentage of 50 vol% is 5.0 µm or more and 15.0 µm or less.

5. The transition metal-containing hydroxide according to claim 1 or 2, wherein a content of a SO₄ component is 0.60 mass% or less.

6. The transition metal-containing hydroxide according to claim 1 or 2, wherein aluminum (Al) is contained as the additive metal element.

7. A positive electrode active material for a non-aqueous electrolyte secondary battery, obtained by calcining the transition metal-containing hydroxide according to claim 1 or 2 and a lithium compound.

8. A non-aqueous electrolyte secondary battery comprising the positive electrode active material for a non-aqueous electrolyte secondary battery according to claim 7.
